# EUROPEAN PATENT APPLICATION

(11) **EP 3 385 055 A1**
(43) Date of publication of application: **10.10.2018**
(21) Application number: 17164582.3
(22) Date of filing: 03.04.2017
(51) Int. Cl.: B29C 51/14, B32B 27/02, B32B 27/12, B32B 37/24, B32B 5/28, B32B 17/04

(54) **METHOD FOR MANUFACTURING RECYCLED PLASTIC COMPOSITE**

(71) Applicant: ECO-oh! Innovation, 2430 Laakdal (BE)
(72) Inventor: Verhaert, Koen, 2430 Laakdal (BE); Galle, Rudy, 9750 Zingem (BE); Dierickx Visschers, Jules, 9750 Zele (BE)
(74) Representative: BiiP cvba

(57) **Abstract**

The present invention is directed to a method for manufacturing a nonwoven plastic composite using recycled thermoplastic material. The method comprises the steps of:
i) Providing flakes of lightweight thermoplastic materials to be recycled;
ii) Mixing the light weight thermoplastic flakes, thereby forming a thermoplastic matrix having a first melting temperature.
iii) Forming a web-structure of a predetermined thickness from fibers having a second melting temperature higher than the first melting temperature using a carding process;
iv) spreading the thermoplastic matrix of light weight thermoplastic flakes over the web-structure,
v) Optionally forming a second web-structure and placing it over the thermoplastic matrix,
vi) Optionally repeating step iv and v, and
vii) Consolidating the web-structure(s) by heating the web at a temperature between the first and second temperature using a thermoforming process.

## Description

### Field of Invention

The present invention relates generally to methods for manufacturing a plastic composite. More particularly, the present invention relates to methods for manufacturing a plastic composite using nonwoven recycled thermoplastic material.

### Background of the Invention

Plastic has become the most widely used material throughout the industry to form a variety of products for domestic as well as commercial purposes. Accordingly, there has been a significant increase in plastic production through the years and this has significantly contributed to the increasing solid waste burden. The characteristics of plastics make them an especially troublesome part of rash because they do not decay quickly.

In order to reduce the costs associated with obtaining raw materials, wastage of natural resources for manufacture of disposable products and to minimize potentially negative effects on the environment, efforts have been constantly done for developing methods for recycling used thermoplastic materials, which would otherwise be burnt or placed in a landfill.

In one such application of recycled thermoplastic materials, a variety of thermoplastic composite sheets / boards have been developed. Such thermoplastic composites, generally prepared by nonwoven methods, include fibers materials reinforced within the recycled thermoplastic materials. These thermoplastic composites provide a number of advantages, e.g., they can be molded and formed into a variety of suitable products both structural and non-structural, including such as, among many others, parking plates, advertisement boards, automotive panels, load carriers (crates, boxes, pallets, etc) and many others.

However, the use of recycled materials for preparing nonwoven thermoplastic composites has its own drawbacks. For example, the recycling of various light weight thermoplastic products, e.g., disposable gloves, aprons, air filters, protective covers, plastic covers, polythene, etc., is not generally preferred as their use often result in products that have physical properties which are generally less acceptable than products made from strong thermoplastic materials. Accordingly, these types of products remain "waste", and thus, continue to be sent to landfills or incinerated, and thus, have deleterious effects on the environment.

In some recent efforts, such shortcoming with the light weight thermoplastic material is resolved by using a method in which light weight plastic materials such as polypropylene (PP) or polyethylene bags, films, rags, or the like are first washed in a centrifuge process and then melted and reprocessed into a raw pellet form. While this process is generally effective in providing desired properties to the output products - it requires the separate melting processes to form pellets, which inevitably adds cost to the process and thus, to the end recycled product.

As a result there is a need in the art for a time-efficient as well as a cost-efficient method for forming nonwoven thermoplastic composites prepared from recycled materials, having properties at least comparable to products made with virgin materials.

### Summary of the Invention

The present invention has been made in the view of the above problems, and discloses a method for manufacturing a nonwoven plastic composite using recycled thermoplastic material. The method comprises the steps of:
i) Providing flakes of lightweight thermoplastic materials to be recycled;
ii) Mixing the light weight thermoplastic flakes, thereby forming a thermoplastic matrix having a first melting temperature.
iii) Forming a web-structure of a predetermined thickness from fibers having a second melting temperature higher than the first melting temperature using a carding process;
iv) spreading the thermoplastic matrix of light weight thermoplastic flakes over the web-structure,
v) Optionally forming a second web-structure and placing it over the thermoplastic matrix,
vi) Optionally repeating step iv and v, and
vii) Consolidating the web-structure(s) by heating the web using a thermoforming process.

Generally, the size of thermoplastic flakes of size ranges between 3mm and 25mm.

In a preferred embodiment, step iv) and v) may be repeated up to 10 or 20 times before consolidating the structure by heat.

Consolidating the web-structure by thermoforming may be done at a temperature between the first and second temperature, such that the thermoplastic matrix melts at least partially, and preferably substantially completely, and such that the fibers having second melting temperature do not melt. In some embodiments, the thermoforming processing temperature may be between 190°C and 250°C, or between 190°C and 230°C, or between 190°C and 210°C, or about 200°C. The resulting nonwoven plastic composite is a rigid composite panel, board, or plank.

Alternatively, consolidating may be done in a two-step thermoforming process. In a first step thermoforming is done at temperature lower than the first temperature (e.g. between 90 and 120°C) such that the thermoplastic matrix melts only superficially and preferably not more than just sufficient to bond the fibers and thermoplastic matrix partially resulting in a flexible intermediate nonwoven, e.g. a flexible mat. Such flexible nonwoven mat is easily foldable and transportable, and is a valuable intermediate product which can be distributed for subsequent thermoforming in a second step. In the second step thermoforming is done at a temperature between the first and second temperature to further consolidate and forming the final nonwoven plastic composite. Optionally a number of flexible mats may be put together for being exposed to the second thermoforming step resulting in a rigid composite panel, board, plank with higher thickness.

Possibly, the method further includes forming a plurality of nonwoven recycled plastic composites and connecting them together one over the other to form a multi-layered nonwoven recycled plastic composite.

Further possibly, the plurality of nonwoven plastic composites may be connected together using processes such as but not limited to thermal pressing, vacuum forming, gluing, welding, or the like.

The light weight thermoplastic matrix generally includes light weight thermoplastic (generally having low weight density) such as plastic foils, plastic bags, plastic gloves, foils, or the like. Preferably its melting temperature (in this text further referred to as the first melting temperature) is lower than 200°C, or lower than 190°C.

The fibers with a second melting temperature higher than the first melting temperature may be natural fibers, preferably unravelled natural fibers, and/or thermoplastic fibers and/or glass fibers.

The natural fibers may be one of but not limited to natural raw fibers such as jute, hemp, cocos, flax, sisal, or the like.

Possibly, the thermoplastic fibers with the second melting temperature may be one of but not limited to polyesters, ABS (acetyl butyl styrene), PS (Poly styrene), nylon, PA (polyamide), or the like.

The second melting temperature may be at least 10°C higher than the first melting temperature, or at least 20°C higher, or at least 30°C higher, or at least 50°C higher. In some embodiments, the second melting temperature may be at least 210°C, or at least 220°C, or at least 240°, or at least 260°

In a method of the present invention, the fibers with second melting temperature and thermoplastic matrix may be present in a ratio of less than 50:50 by weight, or less than 30:70 by weight, or less than 20:80 by weight, and preferably in a ratio of 10:90 by weight.

Further optionally, the method includes treating the nonwoven plastic composite with a finishing material such as but not limited to antimicrobial coating, wax, paint, varnish, or the like.

The thermoforming process may be one of but not limited to the processes such as thermo-bonding, steam heating, microwave heating, heat pressing, pressure molding, vacuum molding, or the like. The thermoforming processing temperature should lay between the first and the second melting temperature, such that the thermoplastic matrix melts at least partially, and preferably substantially completely, and such that the fibers having second melting temperature do not melt. In some embodiments, the thermoforming processing temperature may be between 190°C and 250°C, or between 190°C and 230°C, or between 190°C and 210°C, or about 200°C.

In another aspect of present invention, a nonwoven plastic composite is disclosed. The plastic composite is formed of light weight thermoplastics entangled with fibers.

The nonwoven plastic composite may comprise between about 5% to 50%, or about 5% to about 30%, or about 5% to 20%, and preferably about 10%, by weight of fibers with second melting point.

Further, the nonwoven composite may comprise between about 50% to 95%, or about 70% to about 95%, or about 80% to about 95%, and preferably about 90% by weight of the thermoplastic flakes.

In yet another aspect of the present invention, a multi-layered nonwoven plastic composite formed using recycled plastic and fibers is disclosed.

### Detailed Description of the Preferred Embodiments

The present application discloses a method for forming a nonwoven plastic composite from recycled thermoplastic materials using a simple, cost- efficient method. The method utilizes light weight plastic materials such as but not limited to plastic films, foils, plastic bags, etc. to form a plastic composite having appropriate mechanical properties, high heat resistance, high impact strength, load resistance, and very good dimensional stability. The nonwoven plastic composite constructed is useful for forming varieties of panel boards, such as a construction fencing board, advertising boards, plastic road plates, load carriers such as boxes, crates, pallets, or the like. It is to be understood that while the current disclosure has been explained only for light weight recycled thermoplastic materials such as foils, bags, films etc. the current method may be used for generally all kind of thermoplastic materials.

In an embodiment of the present invention, a plastic panel may be constructed from a nonwoven thermoplastic composite in accordance with one aspect of the present invention. The nonwoven thermoplastic composite, at least in part, is constructed, from used, to be recycled, thermoplastic material. The thermoplastic material generally is a thermoplastic matrix including one or more light weight thermoplastic materials in the forms of flakes of size ranging between 3mm and 15mm. The thermoplastic composite further includes a core of fibers , generally entangled (not shown), and bonded within a three dimensional web structure (not shown) with the thermoplastic matrix .

In an embodiment of present invention, the thermoplastic panel may be formed of a multilayer thermoplastic composite. The multilayer composite includes a first layer of thermoplastic composite attached and / or adhered to an adjacent second layer of thermoplastic composite. In some examples, the layers may be of similar thickness. In some other embodiments, the layer may be of different thickness. In some examples, the first layer and the second layer are both formed of same thermoplastic materials in same composition. In some other examples, the first layer and the second layer may be formed using different type of thermoplastic materials, thereby providing different properties to each one of them. Accordingly, by inclusion of alternating layers of different materials, the multilayer composite can exhibit the desirable qualities such as high chemical, thermal, and mechanical resistance, high strength, or the like.

The thermoplastic composite may further include one or more layer of finishing materials applied onto a top and / or bottom surface of one or more individual layers of the thermoplastic composite. In an embodiment of the present invention, the finishing material includes one or more antimicrobial coatings of material such as antibacterial agent, antifungal agent, or the like. In another embodiment, the finishing material may include waxing solutions, paint, or the like.

The "thermoplastic matrix" appropriate to be used in this invention, generally constitutes, different types of light weight plastic constituents deriving from the recycled objects such as flexible films and/or sheets obtained beginning from commercial labels, and/or bags, and/or containers, and/or wrappings preferably for food and/or agriculture use, preferably made of at least one material among PE, PET, PVC, PP, PS, all of which are normally unable to be reused and that are ordinarily put into a landfill or incinerated because of cost, melting/bonding, or contamination issues.

Some other non-limiting examples of suitable "Thermoplastic matrix" includes a product selected from the following group of resins: ABS, acrylic, high density polyethylene (HDPE), low density polyethylene (LDPE), Polyethylene terephthalate (PET), poly vinyl chloride (PVC), polypropylene (PP) and polystyrene (PS) . Current recycled plastics most commonly available are products made of PET and HDPE and include plastic bottles, containers and packaging, plastic lumber, etc., all of which are identified with one of the acceptable recyclable symbols including: "high density white plastic" means containers and packaging made from white or translucent plastics such as white detergent containers, windshield washer containers, etc.

Further examples of thermoplastic material include, the commercial plastic labels applied to containers, boxes, cans, bottles containing foodstuffs, etc.; transparent, semitransparent and opaque bags, containing fresh and/or long-life foodstuffs; bags for agricultural products, such as fertilizers, manure, seeds etc.; transparent, semitransparent and opaque impermeable tarpaulins; bags for garbage, foodstuff, products and goods, etc.; thermoplastic packaging of mono- and multi-product packs, etc. and/or any suitable combination thereof.

The fibers having a second melting temperature higher than the melting point of the thermoplastic matrix for use in manufacture of the nonwoven plastic composite may include thermoplastic fibers with higher melting point than the melting point of the thermoplastic matrix, and/or glass fibers, and/or a matrix of natural fibers, preferably unraveled, obtained by working entangled natural raw fibers using conventionally available tools such as for example, a bast fibre opening machine, or a tearing machine, or the like.

The term "natural fibers" as used herein, refers to any continuous filament which is derived from natural, renewable sources such as plants or animals. The words "fibers" and "fibers" are used interchangeably. Natural fibers may include, but are not limited to, seed fibers such as cotton and kapok; leaf fibers such as sisal and agave; bast fibers or skin fibers such as flax, jute, kenaf, hemp, ramie, rattan, soybean fibers, vine fibers, and banana fibers; fruit fibers such as coconut fibers; stalk fibers such as straws of wheat, rice, barley, bamboo, grass, and tree wood; animal hair fibers such as sheep's wool, goat hair (cashmere, mohair), alpaca hair, horse hair; silk fibers; avian fibers such as feathers; Preferably, the natural fibers used in this invention should possess at least moderate strength and stiffness and good ductility. Fibers with larger diameters are also preferable as these offer greater fibers stiffness. Further, the lengths of the natural fibers 130 may vary from about 50 mm to 400 mm, preferably from about 150 mm to about 350 mm.

In an embodiment of the present invention, the natural fibers includes natural raw fibers such as jute, hemp, cocos, flax, sisal etc. In a more preferred embodiment of the present invention, jute fibers is used as natural fibers. The jute fibers inherits properties such as low density, low abrasive properties, high strength and therefore good dimensional stability.

In a preferred embodiment of the present invention, the fibers with second melting temperature may be synthetic thermoplastic fibers with higher melting temperature than the thermoplastic matrix, such as fibers of the group of polyesters, ABS, Poly styrene, nylon, PA, or the like.

A method in accordance with the present invention includes a number of steps, however, sequence of the method steps disclosed hereinafter are exemplary for the sake of understanding the invention for persons skilled in the art. First a collection of light weight thermoplastic flakes having low weight density is obtained and mixed together to form a thermoplastic matrix. Generally, the collection of light weight thermoplastic flakes may be obtained in a ready to use configuration from various sources (for example third party vendors) providing the recycled thermoplastic flakes. However, in some embodiments of the present invention, the collection of the thermoplastic flakes is obtained from a collection of thermoplastic material to be recycled. The collection of thermoplastic material generally includes low weight density thermoplastic material mixed along with high weight density thermoplastic materials. The collection of thermoplastic material received is sorted according to various factors such as type of material, color of material, or the like, and is then comminuted to form thermoplastic flakes of size preferably ranging between 3mm and 25mm, or more preferably between 3mm and 15mm. Thereafter the thermoplastic flakes having higher weight density are separated from the thermoplastic flakes having lower weight density; preferably by means of centrifugal process, or by separation in water, such that the light weight thermoplastic flakes having a density lower than water is separated from the flakes having a density greater than water.

In a next step, fibers with second melting temperature are provided undergoing a webbing process, preferably, a carding process to form a homogeneously mixed web structure, The carding process may be performed, for example, on a Rando machine or Laroche machine, or any other machine, as already known in art. Alternatively, the webbing is performed using any known mechanism such as carding process, or the like. Carding is a mechanical process that disentangles and intermixes fibers to produce a continuous web suitable for subsequent processing. By using a carding process a web structure up to a very thin pre-determined thickness can be produced (up to 16g/m²).

Once the web structure is formed, the method proceeds to a next step where the light weight thermoplastic matrix is uniformly spread on the web-structure After spreading the thermoplastic matrix, a second web structure may be positioned on the thermoplastic matrix, as such having the light weight thermoplastic matrix in between two webs. The latter two steps may be repeating a number of times resulting in layers of spread light weight thermoplastic matrix between web structures of fibers, resulting in very high volumes of thermoplastic matrix incorporated in the resulting nonwoven plastic composite. Then, the structure is consolidated by heating using known mechanisms such as a thermoforming process. The thermoforming process used, preferably, is a thermo-bonding process in which the web structure obtained from the previous step is heated by passing through heated calendar rollers. Alternatively the consolidation may be performed by other heating mechanisms that may sufficiently raise the temperature within the web-structure so as to enable bond the thermoplastic materials to each other and to the natural fibers. Such mechanism may include, one of but not limited to heat pressing, vacuum molding, steam heating, microwave heating, or the like, already known in the art. As explained earlier, consolidating may be done by single step thermoforming, or alternatively by a two-step thermoforming process.

The method may further comprise an optional step where two or more thermoplastic composite are manufactured. Thereafter, the two or more thermoplastic composites are connected together in a layered structure to form a multi-layered thermoplastic composite. The layering may be done by using any of the conventionally known techniques such as one of but not limited to pressing, vacuum forming, gluing, welding, or the like. Further, each layer of the multilayer thermoplastic composite may be formed of similar or different thermoplastic material as according to the desired application and properties of the thermoplastic composite to be manufactured.

In some embodiments of the present invention, the method further includes an optional step of treating one or more surface of the thermoplastic composite with a finishing material and / or post treatment processes to impart selected properties to the composite. For example, one or more surface of the thermoplastic composite may be treated with an antimicrobial agent, antifungal agent, or the like. Alternatively and / or additionally, the thermoplastic composite may be treated with finishing materials such as for example, wax, paint, or the like.

### INDUSTRIAL APPLICABILITY

The present disclosure relates to a nonwoven thermoplastic composite sheets, mats, or boards formed of recycled plastic materials generally of light weight, and is usable for various utilities such as traffic management products such as advertising boards, parking plates, drive plates, other structural components formed of thermoplastic materials and requiring desired properties such as Impact strength, swell, heat resistance, heat retardancy, dimensional stability, wear resistance, etc. at least comparable with conventional plastic sheets, mats or boards. In addition, by spreading recycled thermoplastic matrix over thin webs of fibers, very high volumes of recycled thermoplastic matrix can be incorporated in the resulting nonwoven plastic composite.

The thermoplastic composite may include about 10% to 50%, or 10% to about 30%, and preferably about 20% by weight of reinforcing fibers having an average length of between about 50 mm and about 400 mm, and preferably between about 150 mm and about 350 mm. The thermoplastic composite includes generally and about 50% to 90%, or 70% to about 90% and preferably about 80% by weight of flakes of thermoplastic materials, having an average size ranging between about 3 mm and about 25 mm where the weight percentages are based on the total weight of the thermoplastic composite.

The present disclosure further provides a method, for manufacturing nonwoven thermoplastic composite by recycling light weight thermoplastic materials. The method is generally a simple, cost efficient, time-saving, method for forming a high quality thermoplastic composite using generally unutilized light weight plastic wastes such as plastic foils, plastic bags, gloves, or the like, and/or combinations thereof. Conventionally, using such light weight plastic materials required additional step of melting down and shaping into granulates or pellets, before being applicable to be used for manufacturing of thermoplastic composites. However by using the method 400 in accordance with the present invention, the recycling process may be considerably and significantly shortened.

## Claims

1. A method of manufacturing a nonwoven recycled plastic composite, the method comprising the steps of:
i) Providing flakes of lightweight thermoplastic materials to be recycled;
ii) Mixing the light weight thermoplastic flakes, thereby forming a thermoplastic matrix having a first melting temperature.
iii) Forming a web-structure of a predetermined thickness from fibers having a second melting temperature higher than the first melting temperature using a carding process;
iv) spreading the thermoplastic matrix of light weight thermoplastic flakes over the web-structure,
v) Optionally forming a second web-structure and placing it over the thermoplastic matrix,
vi) Optionally repeating step iv and v, and
vii) Consolidating the web-structure(s) by heating the web using a thermoforming process.

2. The method of claim 1, wherein the light weight thermoplastic flakes are obtained by a method comprising the steps of:
i) Providing one or more thermoplastic materials to be recycled;
ii) Comminuting the one or more thermoplastic materials into small sized flakes;
iii) Sorting the thermoplastic material flakes into light weight thermoplastic materials and high weight thermoplastic materials.

3. The method of claim 1, wherein the step of consolidating is done via two-step thermoforming process.

4. The method of claim 3, wherein the plurality of plastic composites may be connected in a layered structure using a process selected but not limited to one of pressing, vacuum forming, gluing, or welding.

5. The method of claim 1 or 2, wherein the thermoplastic material is individually selected from the group of resins including but not limited to ABS, acrylic, high density polyethylene (HDPE), low density polyethylene (LDPE), Polyethylene terephthalate (PET), poly vinyl chloride (PVC), polypropylene (PP) and polystyrene (PS), plastic bottles, containers and packaging, plastic lumber, plastic bags, plastic foils, films, and /or combination thereof.

6. A method of claim 1 or 2, wherein the light weight thermoplastic materials include one or more of the group comprising plastic foils, plastic bags, low density polyethylene (LDPE) , low density polyethylene (LDPE), plastic wrappers, or the like, and/or combinations thereof.

7. The method of claim 1 or 2, wherein the fibers having a second melting temperature includes fibers of one or more materials from the group comprising glass fibers, polyester, ABS, Poly styrene, nylon, PA, or the like, and/or combinations thereof.

8. The method of claim 1, wherein the fibers having a second melting temperature are natural fibers individually selected from one or more of seed fibers such as cotton and kapok; leaf fibers such as sisal and agave; bast fibers or skin fibers such as flax, jute, kenaf, hemp, ramie, rattan, soybean fibers, vine fibers, and banana fibers; fruit fibers such as coconut fibers; stalk fibers such as straws of wheat, rice, barley, bamboo, grass, and tree wood; animal hair fibers such as sheep's wool, goat hair, alpaca hair, horse hair; silk fibers; avian fibers such as feathers.

9. The method of claim 1, wherein heating process comprises one of steam heating, steam injection heating, microwave heating, vacuum heating, or the like.

10. The method of claim 1, wherein the size of flakes ranges between 3mm and 25 mm.

11. The method of claim 1, wherein the fibers with second melting temperature and thermoplastic matrix are present in a ratio of less than 50:50 by weight, or less than 30:70 by weight, or less than 20:80 by weight, and preferably in a ratio of 10:90 by weight.

12. The method of claim 1, wherein the length of natural fibers ranges between 50 mm to about 400 mm, and preferably between 100 mm and 300mm.

13. A nonwoven recycled plastic composite manufactured using method of any of the preceding claims.

14. The nonwoven plastic composite of claim 13, wherein the nonwoven composite comprises between about 5% to 50%, or about 5% to about 30%, or about 5% to 20%, and preferably about 10%, by weight of fibers with second melting point.

15. The nonwoven plastic composite of claim 13, wherein the nonwoven composite comprises between about 50% to 95%, or about 70% to about 95%, or about 80% to about 95%, and preferably about 90% by weight of the thermoplastic flakes.
